# EUROPEAN PATENT SPECIFICATION

(11) **EP 3 483 528 B1**
(45) Date of publication and mention of the grant of the patent: **05.05.2021**
(21) Application number: 16908152.8
(22) Date of filing: 06.07.2016
(51) Int. Cl.: F25B 47/02, F25D 21/06, F25B 13/00

(54) **REFRIGERATION CYCLE SYSTEM**
KÄLTEKREISLAUFSYSTEM
SYSTÈME À CYCLE FRIGORIFIQUE

(43) Date of publication of application: 15.05.2019
(73) Proprietor: Mitsubishi Electric Corporation, Chiyoda-ku Tokyo 100-8310 (JP)
(72) Inventor: TANAKA, Kosuke, Tokyo 100-8310 (JP)
(74) Representative: Mewburn Ellis LLP
(86) International application number: PCT/JP2016/070015
(87) International publication number: WO 2018/008108

(56) References cited:
- EP-A1- 2 615 389
- WO-A1-2016/042613
- JP-A- H0 534 049
- JP-A- H0 534 049
- JP-A- H10 160 327
- JP-A- 2005 195 295
- JP-A- 2012 087 952
- JP-A- 2014 214 886
- JP-A- 2014 214 886
- KR-A- 20120 012 620
- US-A1- 2010 106 302
- US-A1- 2013 312 436

## Description

### TECHNICAL FIELD

The present invention relates to a refrigeration cycle apparatus configured to perform defrosting operation.

### BACKGROUND ART

A refrigeration cycle apparatus configured to perform defrosting operation (defrost) for melting and removing frost formed on an evaporator has been conventionally known. For example, Japanese Patent Laying-Open No. 5-34049 (PTL 1) discloses a refrigeration apparatus for a container configured to perform defrosting operation. According to the refrigeration apparatus for a container, switching between heating defrost and off-cycle defrost can be performed based on a prescribed condition, thereby reducing the consumed power required for the defrosting operation.

### CITATION LIST

### PATENT LITERATURE

PTL 1: Japanese Patent Laying-Open No. 5-34049

### SUMMARY OF INVENTION

### TECHNICAL PROBLEM

Both liquid refrigerant and gas refrigerant exist in an evaporator. When an amount of the liquid refrigerant in the evaporator is large at the start of the defrosting operation, an amount of heat used to vaporize the liquid refrigerant, of an amount of heat generated to melt frost, is large, and thus, an amount of heat used to melt frost is reduced. As a result, a longer length of time is required for the defrosting operation. The length of time required for the defrosting operation corresponds to the interruption time of normal operation, and thus, it is desirable that the length of time required for the defrosting operation should be short. However, Japanese Patent Laying-Open No. 5-34049 (PTL 1) does not disclose a configuration for shortening the length of time required for the defrosting operation.

The present invention has been made to solve the above-described problem, and an object of the present invention is to shorten a length of time required for defrosting operation.
KR2012 0012620 discloses a method for defrosting operation of air conditioner. US2010/106302 discloses a controlling frozen state of a cargo.
JP 2014 214886 discloses a heat pump system. 10 JP H05 34049 discloses a defrosting operation control device for freezing device for container.

### SOLUTION TO PROBLEM

A refrigeration cycle apparatus according to the present invention is set forth in claim 1.

### ADVANTAGEOUS EFFECTS OF INVENTION

In the refrigeration cycle apparatus according to the present invention, the amount of air blown by the first blower per unit time is larger after the start condition for the defrosting operation is satisfied than before the start condition is satisfied. Therefore, the heat exchange efficiency of an evaporator after the start condition for the defrosting operation is satisfied is increased and vaporization of liquid refrigerant is promoted. Since the defrosting operation is performed with an amount of the liquid refrigerant in the evaporator being small, an amount of heat used to melt frost, of an amount of heat used for defrosting, is large. As a result, the length of time required for the defrosting operation, i.e., the interruption time of normal operation, can be shortened and the user's comfort can be increased.

### BRIEF DESCRIPTION OF DRAWINGS

Fig. 1 is a functional block diagram showing a configuration of a refrigerator which is one example of a refrigeration cycle apparatus not according to the current invention, referred to in the following as a first embodiment.
Fig. 2 is a flowchart for illustrating one example of a process flow of defrosting operation performed in a general refrigeration cycle apparatus.
Fig. 3 is a flowchart for illustrating an overview of a process flow of defrosting operation performed in the first embodiment not according to the current invention.
Fig. 4 is a flowchart for illustrating the process flow of the defrosting operation performed in the first embodiment not according to the current invention.
Fig. 5 is a P-h diagram showing the relation between the pressure and the enthalpy of refrigerant in the first embodiment not according to the current invention.
Fig. 6 is a flowchart for illustrating a process flow of defrosting operation performed in a first modification of the first embodiment, which is according to the current invention.
Fig. 7 is a flowchart for illustrating a process flow of defrosting operation performed in a second modification of the first embodiment which is not according to the current invention.
Fig. 8 is a P-h diagram showing the relation between the pressure and the enthalpy of refrigerant in the second modification of the first embodiment not according to the current invention.
Fig. 9 is a flowchart for illustrating a process flow of defrosting operation performed in a third modification of the first embodiment which is according to the current invention.
Fig. 10 is a functional block diagram showing a configuration of a refrigerator which is one example of a refrigeration cycle apparatus according to a second embodiment which is not according to the current invention.
Fig. 11 is a flowchart for illustrating a process flow of defrosting operation performed in the second embodiment not according to the current invention.
Fig. 12 is a P-h diagram showing the relation between the pressure and the enthalpy of refrigerant in the second embodiment not according to the current invention.
Fig. 13 is a functional block diagram showing a configuration of a refrigerator which is one example of a refrigeration cycle apparatus according to a modification of the second embodiment which is not according to the current invention.
Fig. 14 is a functional block diagram showing a configuration of a refrigerator which is one example of a refrigeration cycle apparatus according to a third embodiment which is not according to the current invention.
Fig. 15 is a flowchart for illustrating a process flow of defrosting operation performed in the third embodiment not according to the current invention.
Fig. 16 is a P-h diagram showing the relation between the pressure and the enthalpy of refrigerant in the third embodiment not according to the current invention.
Fig. 17 is a functional block diagram showing a configuration of an air conditioning apparatus which is one example of the refrigeration cycle apparatus according to a fourth embodiment which is not according to the current invention.
Fig. 18 is a flowchart for illustrating a process flow of defrosting operation performed in the fourth embodiment not according to the current invention.
Fig. 19 is a functional block diagram showing a configuration of an air conditioning apparatus which is one example of a refrigeration cycle apparatus according to a fifth embodiment which is not according to the current invention.
Fig. 20 is a flowchart for illustrating a process flow of defrosting operation performed in the fifth embodiment not according to the current invention.

### DESCRIPTION OF EMBODIMENTS

Embodiments of the present invention will be described in detail hereinafter with reference to the drawings, in which the same or corresponding portions are denoted by the same reference characters and description thereof will not be repeated in principle.

### First Embodiment

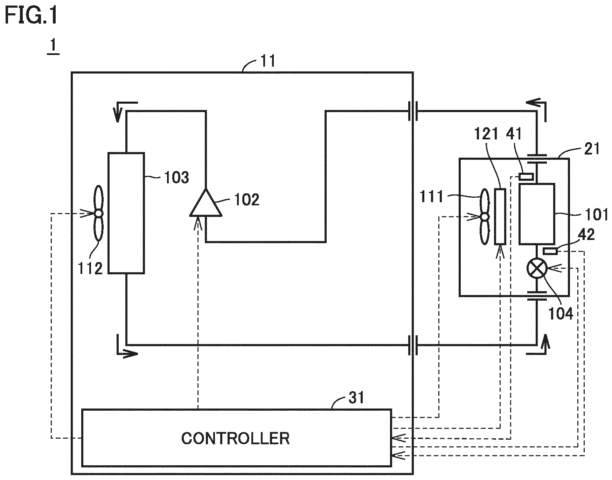

Fig. 1 is a functional block diagram showing a configuration of a refrigerator 1 which is one example of a refrigeration cycle apparatus according to a first embodiment. As shown in Fig. 1, refrigerator 1 includes an outdoor unit 11 and an indoor unit 21.

Outdoor unit 11 includes a compressor 102, a condenser 103, an outdoor fan 112, and a controller 31. Indoor unit 21 includes an evaporator 101, an expansion valve 104, an indoor fan 111, an indoor heater 121, and temperature sensors 41 and 42.

Controller 31 may be included in indoor unit 21, or may be arranged outside outdoor unit 11 and indoor unit 21.

In refrigerator 1, refrigerant circulates through evaporator 101, compressor 102, condenser 103, and expansion valve 104 in this order.

Compressor 102 compresses low-pressure gas refrigerant received from evaporator 101, and outputs high-pressure gas refrigerant to condenser 103. Condenser 103 receives and condenses the high-temperature and high-pressure gas refrigerant from compressor 102, and discharges liquid refrigerant to expansion valve 104. Heat (condensation heat) generated when the gas refrigerant condenses to the liquid refrigerant is released from condenser 103. Outdoor fan 112 blows air into condenser 103.

Expansion valve 104 adiabatically expands and decompresses the liquid refrigerant from condenser 103, and discharges wet vapor to evaporator 101. A linear expansion valve (LEV) can, for example, be used as expansion valve 104. Evaporator 101 receives the wet vapor from expansion valve 104, evaporates the liquid refrigerant included in the wet vapor, and discharges gas refrigerant to compressor 102. In evaporator 101, the liquid refrigerant deprives the indoor air of heat (vaporization heat) and evaporates. Indoor fan 111 blows air into evaporator 101. Indoor heater 121 operates during defrosting operation to heat evaporator 101. Temperature sensor 41 is disposed in a pipe of evaporator 101 and outputs the detected pipe temperature to controller 31. Temperature sensor 42 is disposed near an air inlet of evaporator 101 and outputs the detected air temperature to controller 31.

Controller 31 controls a driving frequency of compressor 102 to thereby control an amount of the refrigerant discharged by compressor 102 per unit time. Controller 31 obtains the pipe temperature of evaporator 101 from temperature sensor 41. Controller 31 obtains the temperature of the air taken into evaporator 101 from temperature sensor 42. Controller 31 adjusts a rotation speed of each of indoor fan 111 and outdoor fan 112 to thereby control an amount of air blown by each of indoor fan 111 and outdoor fan 112 per unit time. Controller 31 has a control unit (not shown) including a processor such as, for example, a CPU (Central Processing Unit). The controller has a storage unit (not shown) including a nonvolatile memory such as, for example, a flash memory. The storage unit can store, for example, an OS (Operating System) read and executed by the control unit, programs for various applications (e.g., a program for controlling the defrosting operation), and various types of data used by the programs.

In the first embodiment, during normal operation, frost may in some cases form on evaporator 101 arranged in indoor unit 21 having a low room temperature. Defrosting in the first embodiment is performed by stopping compressor 102 and heating evaporator 101 by indoor heater 121.

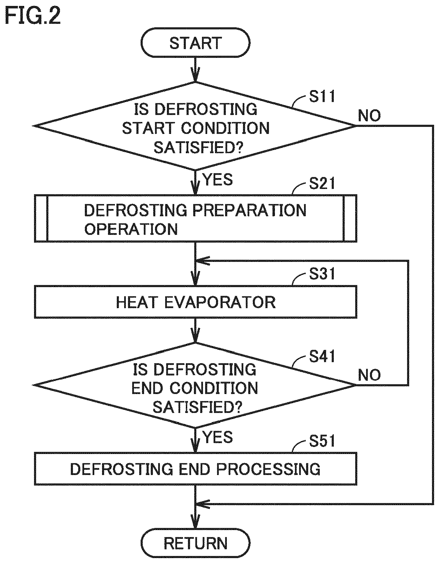

Fig. 2 is a flowchart for illustrating one example of a process flow of defrosting operation performed in a general refrigeration cycle apparatus. The process shown in Fig. 2 is executed at certain time intervals by a not-shown main routine. Hereinafter, a step will be simply indicated as "S".

As shown in Fig. 2, in S11, the controller determines whether or not a defrosting start condition is satisfied. The defrosting start condition may be any condition as long as it is a condition indicating that the heat exchange efficiency of the evaporator falls below a reference value. Examples of the defrosting start condition can include a condition that a difference between the air temperature near the inlet of evaporator 101 and an evaporation temperature is greater than a prescribed value. When the defrosting start condition is not satisfied (NO in S11), the controller returns the process to the main routine. When the defrosting start condition is satisfied (YES in S11), the controller moves the process to S21.

In S21, the controller performs defrosting preparation operation, and moves the process to S31. In S31, the controller heats the evaporator for a certain time period, and moves the process to S41. Examples of a method for heating the evaporator can include a method for heating the evaporator by a heater, a method for heating the evaporator by the outdoor air, and a method for causing backflow of the refrigerant and causing the heat exchanger functioning as an evaporator to function as a condenser to thereby generate heat.

In S41, the controller determines whether or not a defrosting end condition is satisfied. Examples of the defrosting end condition can include a condition that the pipe temperature of the evaporator is higher than a prescribed temperature. When the defrosting end condition is not satisfied (NO in S41), the controller returns the process to S31. When the defrosting end condition is satisfied (YES in S41), the controller moves the process to S51. In S51, the controller executes the defrosting end process, and returns the process to the main routine.

Both the liquid refrigerant and the gas refrigerant exist in the evaporator. When an amount of the liquid refrigerant in the evaporator is large at the start of the defrosting operation, an amount of heat used to vaporize the liquid refrigerant, of an amount of heat generated to melt frost, is large, and thus, an amount of heat used to melt frost is reduced. As a result, a longer length of time is required for the defrosting operation. The length of time required for the defrosting operation corresponds to the interruption time of the normal operation, and thus, it is desirable that the length of time required for the defrosting operation should be short.

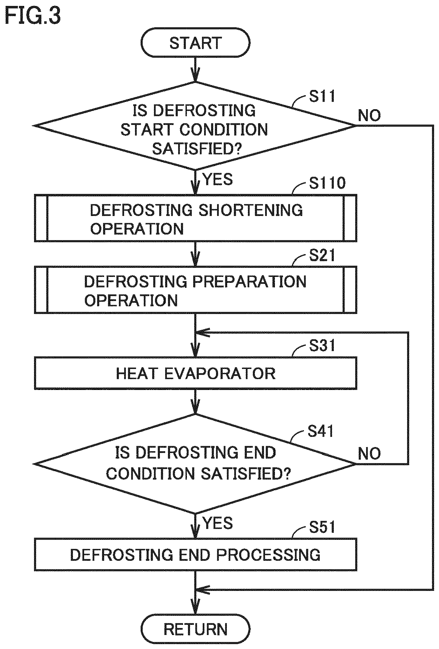

Accordingly, in the first embodiment, the amount of the liquid refrigerant in the evaporator is reduced and an operation for shortening the defrosting time (defrosting shortening operation) is performed. Fig. 3 is a flowchart for illustrating an overview of a process flow of defrosting operation performed in the first embodiment. As shown in Fig. 3, in the first embodiment, the defrosting shortening operation (S110) is performed after the defrosting start condition is satisfied and before the defrosting preparation operation is performed. The defrosting shortening operation is performed prior to heating of the evaporator (S31), and thus, the liquid refrigerant in the evaporator can be reduced and the length of time required for heating of the evaporator can be shortened. As a result, the length of time required for the defrosting operation, i.e., the interruption time of the normal operation, can be shortened and the user's comfort can be increased.

In the first embodiment, during the defrosting shortening operation, the rotation speed of indoor fan 111 is increased and the amount of air blown by indoor fan 111 per unit time is increased to be larger than the amount of air before the defrosting start condition is satisfied. The heat exchange efficiency of evaporator 101 is increased and vaporization of the liquid refrigerant is promoted. As a result, the amount of the liquid refrigerant in evaporator 101 is reduced.

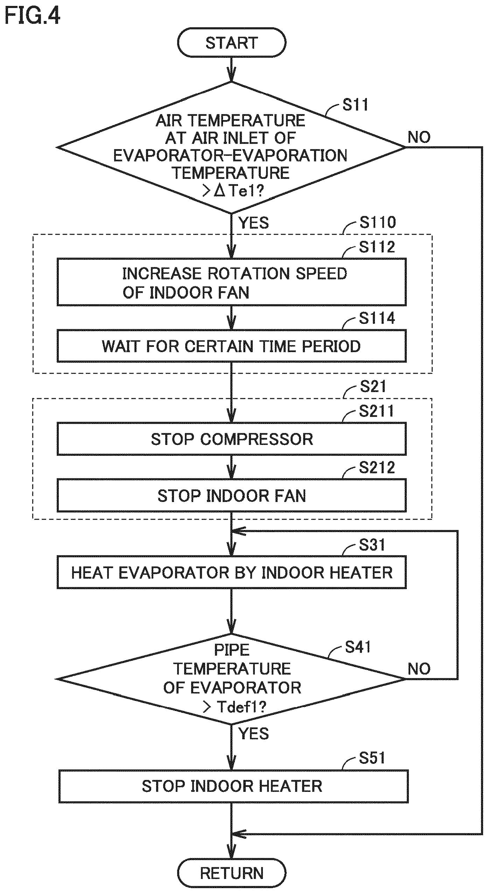

Fig. 4 is a flowchart for illustrating a process flow of the defrosting operation performed in the first embodiment. As shown in Fig. 4, in S11, controller 31 determines as the defrosting start condition whether or not the difference between the air temperature at the air inlet of evaporator 101 and the evaporation temperature is greater than a reference value ΔTe1. When the difference between the air temperature at the air inlet of evaporator 101 and the evaporation temperature is equal to or smaller than reference value ΔTe1 (NO in S11), controller 31 returns the process to the main routine because the room temperature can be reduced to a target temperature by heat exchange between the air around evaporator 101 and the liquid refrigerant. When the difference between the air temperature at the air inlet of evaporator 101 and the evaporation temperature is greater than reference value ΔTe1 (YES in S11), controller 31 moves the process to S112 because the heat exchange efficiency of evaporator 101 decreases due to formation of frost and the room temperature cannot be reduced to the target temperature even if the normal operation is continued.

In S112, controller 31 increases the rotation speed of indoor fan 111 to thereby increase the amount of air blown by indoor fan 111 per unit time, and moves the process to S114. In S114, controller 31 waits for a certain time period, and moves the process to S211. During waiting for the certain time period, the amount of the liquid refrigerant in evaporator 101 is reduced. How long controller 31 waits in S114 can be determined as appropriate by real machine experiment or simulation.

In S211, controller 31 stops compressor 102, and moves the process to S212. In S212, controller 31 stops indoor fan 111 to prevent the air heated by indoor heater 121 from being discharged from indoor unit 21, and moves the process to S31.

In order to melt frost formed on evaporator 101, controller 31 operates indoor heater 121 to heat evaporator 101, and moves the process to S41.

In S41, controller 31 determines as the defrosting end condition whether or not the pipe temperature of evaporator 101 is higher than a reference temperature Tdef1. When the pipe temperature of evaporator 101 is equal to or lower than reference temperature Tdefl (NO in S41), controller 31 returns the process to S31 because heating of evaporator 101 is insufficient. When the pipe temperature of evaporator 101 is higher than reference temperature Tdef1 (YES in S41), controller 31 moves the process to S51 because evaporator 101 is sufficiently heated and defrosting is completed. In S51, controller 31 stops indoor heater 121, and returns the process to the main routine.

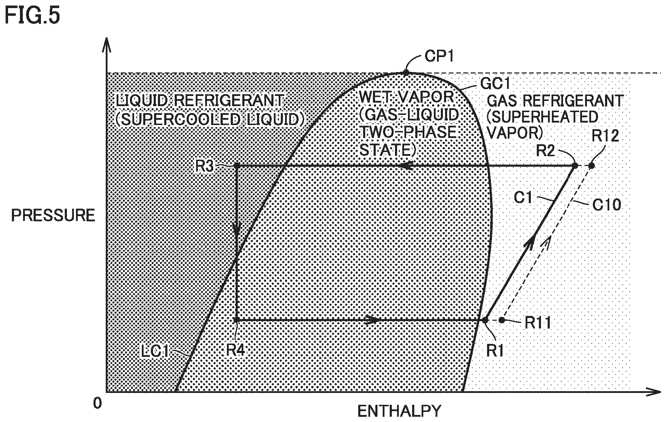

Fig. 5 is a P-h diagram showing the relation between the pressure and the enthalpy of the refrigerant in the first embodiment. In Fig. 5, a curve LC1 represents a saturated liquid line of the refrigerant. A curve GC1 represents a saturated vapor line of the refrigerant. A point CP1 represents a critical point of the refrigerant. The critical point is a point indicating a limit of a range in which a phase change between the liquid refrigerant and the gas refrigerant can occur, and is an intersection point of the saturated liquid line and the saturated vapor line. When the pressure of the refrigerant becomes higher than the pressure at the critical point, the phase change between the liquid refrigerant and the gas refrigerant no longer occurs. In a region lower in enthalpy than the saturated liquid line, the refrigerant is in a liquid state. In a region sandwiched between the saturated liquid line and the saturated vapor line, the refrigerant is in a gas-liquid two-phase state (wet vapor). In a region higher in enthalpy than the saturated vapor line, the refrigerant is in a gas state.

In Fig. 5, a cycle C1 represents circulation of the refrigerant during the normal operation. A process of a state change from a point R1 to a point R2 represents a process of compression of the refrigerant by compressor 102. A process of a state change from point R2 to a point R3 represents a process of condensation by condenser 103. A process of a state change from point R3 to a point R4 represents a process of adiabatic expansion by expansion valve 104. A process of a state change from point R4 to point R1 represents a process of evaporation by evaporator 101.

In Fig. 5, a cycle C10 represents circulation of the refrigerant during the defrosting shortening operation. As shown in Fig. 5, an arrival point R11 of the evaporation process by evaporator 101 in cycle C10 is higher in enthalpy than an arrival point R1 of the evaporation process in cycle C1. That is, cycle C10 is higher in degree of superheating than cycle C1. This is because, by increasing the rotation speed of indoor fan 111 during the defrosting shortening operation, the heat exchange efficiency of evaporator 101 is increased and vaporization of the liquid refrigerant is promoted, and thus, the amount of the liquid refrigerant in evaporator 101 decreases and an amount of heat absorbed into the gas refrigerant in evaporator 101 during the evaporation process increases.

As described above, according to the first embodiment, the amount of air blown by the indoor fan per unit time after the start condition for the defrosting operation is satisfied is increased to be larger than the amount of air before the start condition is satisfied, and thus, the amount of the liquid refrigerant in the evaporator can be reduced. As a result, the length of time required for the defrosting operation can be shortened and the user's comfort can be increased.

### [Description of Modification of First Embodiment]

The first embodiment has given a description of the case of increasing the rotation speed of the indoor fan in order to reduce the amount of the liquid refrigerant in the evaporator. The process for reducing the amount of the liquid refrigerant in the evaporator is not limited to increasing the rotation speed of the indoor fan. By combining another process with increasing the rotation speed of the indoor fan, the defrosting time can be further shortened. Three modifications will be described below, in which other processes are executed during the defrosting shortening operation, in addition to increasing the rotation speed of the indoor fan.

### First Modification of First Embodiment

In a first modification of the first embodiment, in addition to increasing the rotation speed of the indoor fan, a degree of opening of the expansion valve is decreased during the defrosting shortening operation. By decreasing the degree of opening of the expansion valve, an amount of the wet vapor flowing into the evaporator decreases. As a result, the amount of the liquid refrigerant in the evaporator can be reduced.

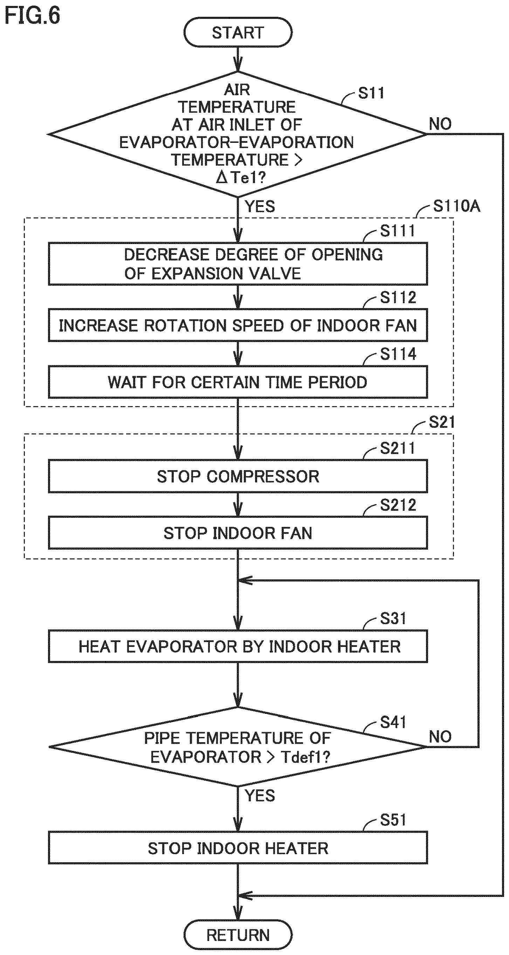

A difference between the first embodiment and the first modification is a process flow of the defrosting operation. That is, Fig. 4 is replaced with Fig. 6. Since the remaining configuration is similar, description will not be repeated.

Fig. 6 is a flowchart for illustrating a process flow of defrosting operation performed in the first modification of the first embodiment. In the flowchart shown in Fig. 6, S110 in Fig. 4 is replaced with S110A.

As shown in Fig. 6, when the defrosting start condition is satisfied in S11, the controller decreases the degree of opening of expansion valve 104 to be lower than the degree of opening before the defrosting start condition is satisfied in S111. Thereafter, similarly to the first embodiment, the controller increases the rotation speed of indoor fan 111 in S112, waits for a certain time period in S114, and moves the process to S21. In S21, the controller stops compressor 102 (S211) and stops indoor fan 111 (S212), and moves the process to S31.

The controller heats evaporator 101 by indoor heater 121 until the defrosting end condition is satisfied (YES in S41). Thereafter, in S51, the controller stops indoor heater 121, and returns the process to the main routine.

As described above, according to the first modification of the first embodiment, in addition to increasing the rotation speed of the indoor fan, the degree of opening of expansion valve 104 is decreased during the defrosting shortening operation, and thus, the amount of the liquid refrigerant in the evaporator can be reduced as compared with the first embodiment. As a result, the length of time required for the defrosting operation can be shortened and the user's comfort can be further increased as compared with the first embodiment.

### Second Modification of First Embodiment

In a second modification of the first embodiment, in addition to increasing the rotation speed of the indoor fan, the rotation speed of the outdoor fan is increased during the defrosting shortening operation. By increasing the rotation speed of the outdoor fan, the heat exchange efficiency of the condenser increases. Condensation of the gas refrigerant is promoted, and thus, an amount of the gas refrigerant in the condenser decreases and a condensation pressure decreases. Therefore, a pressure difference of the refrigerant before and after the refrigerant passes through the expansion valve (differential pressure of the expansion valve) decreases. When the differential pressure of the expansion valve decreases, an amount of the refrigerant passing through the expansion valve decreases and an amount of the refrigerant flowing into the evaporator decreases. As a result, the amount of the liquid refrigerant in the evaporator can be reduced.

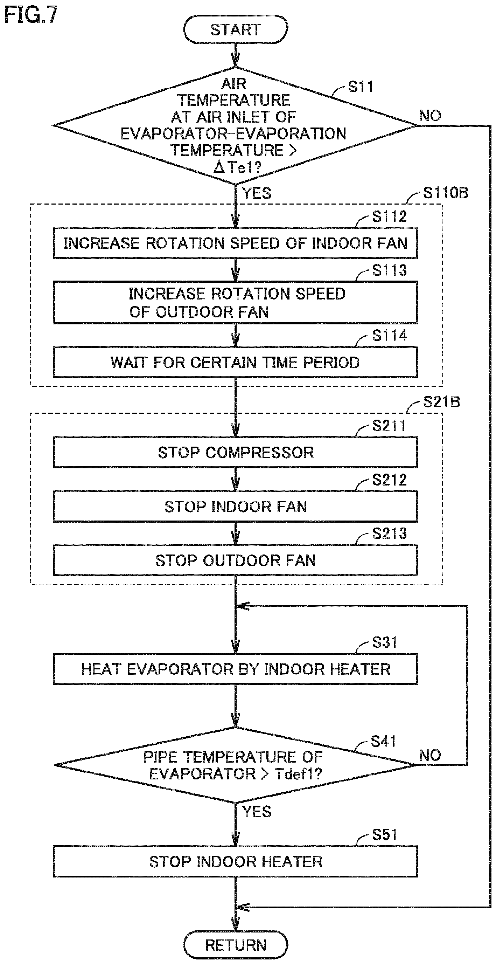

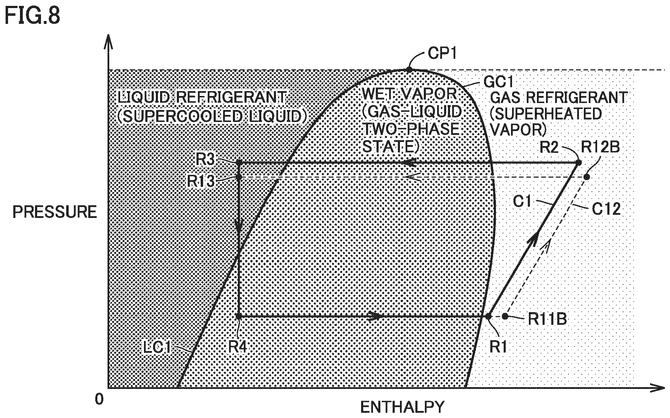

A difference between the first embodiment and the second modification is a process flow of defrosting operation and a P-h diagram. That is, Figs. 4 and 5 are replaced with Figs. 7 and 8, respectively. Since the remaining configuration is similar, description will not be repeated.

Fig. 7 is a flowchart for illustrating a process flow of defrosting operation performed in the second modification of the first embodiment. In the flowchart shown in Fig. 7, S110 and S21 in Fig. 4 are replaced with S110B and S21B.

As shown in Fig. 7, when the defrosting start condition is satisfied in S11, the controller increases the rotation speed of indoor fan 111 in S112 similarly to the first embodiment, increases the rotation speed of outdoor fan 112 in S113, and then, waits for a certain time period in S114 and moves the process to S21B. In S21B, the controller stops compressor 102 (S211) and stops indoor fan 111 and outdoor fan 112 (S212 and S213), and moves the process to S31.

The controller heats evaporator 101 by indoor heater 121 (S31) until the defrosting end condition is satisfied (YES in S41). Thereafter, in S51, the controller stops indoor heater 121, and returns the process to the main routine.

Fig. 8 is a P-h diagram showing the relation between the pressure and the enthalpy of the refrigerant in the second modification of the first embodiment. In Fig. 8, a cycle C12 represents circulation of the refrigerant during the defrosting shortening operation. As shown in Fig. 8, similarly to the first embodiment, an arrival point R11B of the evaporation process by evaporator 101 is higher in enthalpy than arrival point R1 of the evaporation process in cycle C1 because the rotation speed of indoor fan 111 is increased. In the second modification of the first embodiment, as the effect of increasing the rotation speed of outdoor fan 112, a pressure (condensation pressure) in a condensation process expressed as a state change from a point R12B to a point R13 is lower than that in cycle C1. When the condensation pressure decreases, the differential pressure of expansion valve 104 decreases and the amount of the refrigerant passing through expansion valve 104 decreases. As a result, the amount of the refrigerant flowing into evaporator 101 decreases, and thus, the amount of the liquid refrigerant in evaporator 101 can be reduced.

As described above, according to the second modification of the first embodiment, in addition to increasing the rotation speed of the indoor fan, the rotation speed of the outdoor fan is increased during the defrosting shortening operation, and thus, the amount of the liquid refrigerant in the evaporator can be reduced as compared with the first embodiment. As a result, the length of time required for the defrosting operation can be shortened and the user's comfort can be further increased as compared with the first embodiment.

### Third Modification of First Embodiment

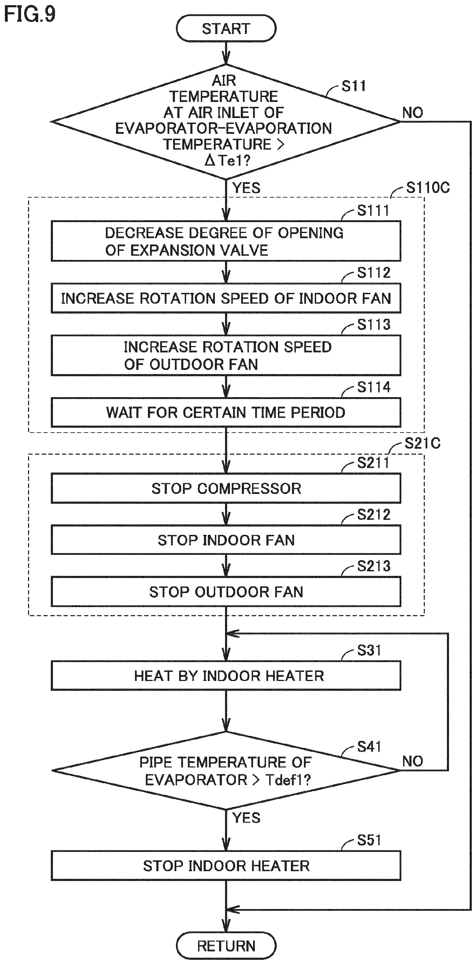

In a third modification of the first embodiment, as shown by S110C in Fig. 9, in addition to increasing the rotation speed of the indoor fan, the degree of opening of the expansion valve is decreased and the rotation speed of the outdoor fan is increased during the defrosting shortening operation. According to the third modification of the first embodiment, the amount of the liquid refrigerant in the evaporator can be reduced during the defrosting shortening operation as compared with the first and second modifications of the first embodiment. As a result, the length of time required for the defrosting operation can be shortened and the user's comfort can be further increased as compared with the first and second modifications of the first embodiment.

### Second Embodiment

A second embodiment will give a description of a configuration in which the high-temperature gas refrigerant (hot gas) output from the compressor joins a flow path connecting the expansion valve and the evaporator during the defrosting shortening operation. By increasing the enthalpy of the wet vapor flowing into the evaporator due to the high-temperature refrigerant, vaporization of the liquid refrigerant in the evaporator is promoted. As a result, the amount of the liquid refrigerant in the evaporator can be reduced.

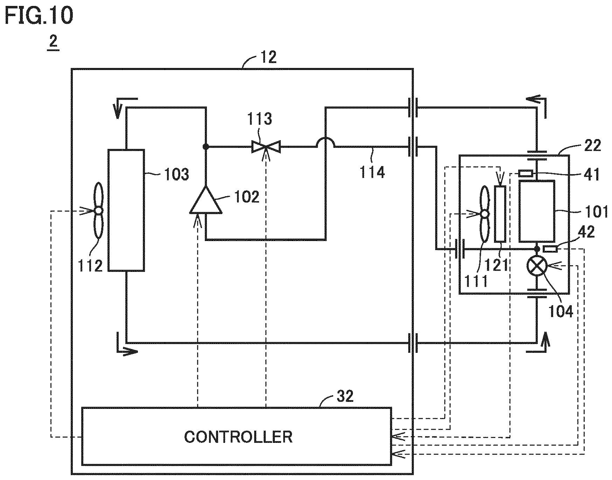

Fig. 10 is a functional block diagram showing a configuration of a refrigerator 2 which is one example of a refrigeration cycle apparatus according to the second embodiment. As shown in Fig. 10, refrigerator 2 is configured such that an on-off valve 113 and a bypass flow path 114 are added to the configuration of refrigerator 1 shown in Fig. 1 and controller 31 is replaced with a controller 32. Opening and closing of on-off valve 113 are controlled by controller 32. Bypass flow path 114 branches off from a flow path between compressor 102 and condenser 103, passes through on-off valve 113, and joins a flow path between expansion valve 104 and evaporator 101. On-off valve 113 is desirably an electromagnetic valve that can be opened and closed instantaneously.

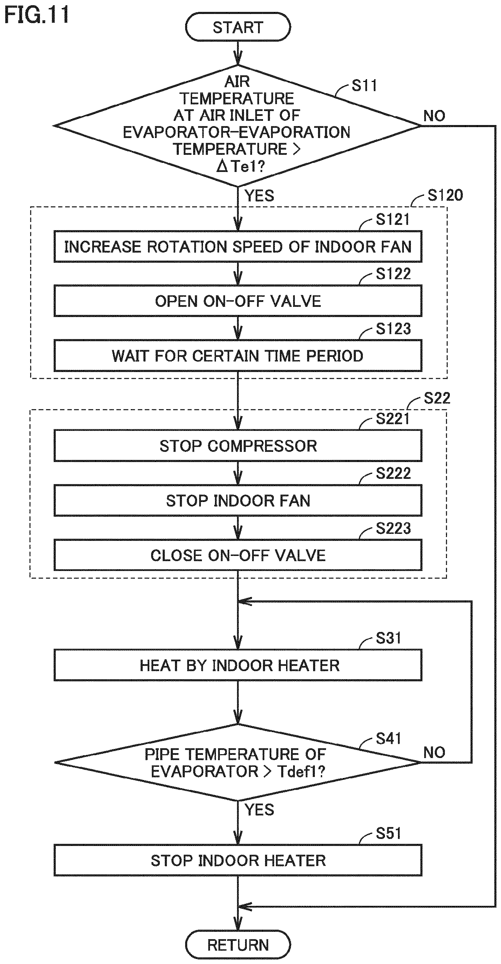

Fig. 11 is a flowchart for illustrating a process flow of defrosting operation performed in the second embodiment. In the flowchart shown in Fig. 11, S110 and S21 in Fig. 4 are replaced with S120 and S22, respectively. As shown in Fig. 11, when the defrosting start condition is satisfied in S11, controller 32 increases the rotation speed of indoor fan 111 in S121 similarly to the first embodiment, opens on-off valve 113 in S122, and then, waits for a certain time period in S123 and moves the process to S22. In S22, controller 32 stops compressor 102 and indoor fan 111 (S221 and S222) and closes on-off valve 113 (S223), and moves the process to S31. Controller 32 heats evaporator 101 by indoor heater 121 until the defrosting end condition is satisfied (YES in S41). Thereafter, in S51, controller 32 stops indoor heater 121, and returns the process to the main routine.

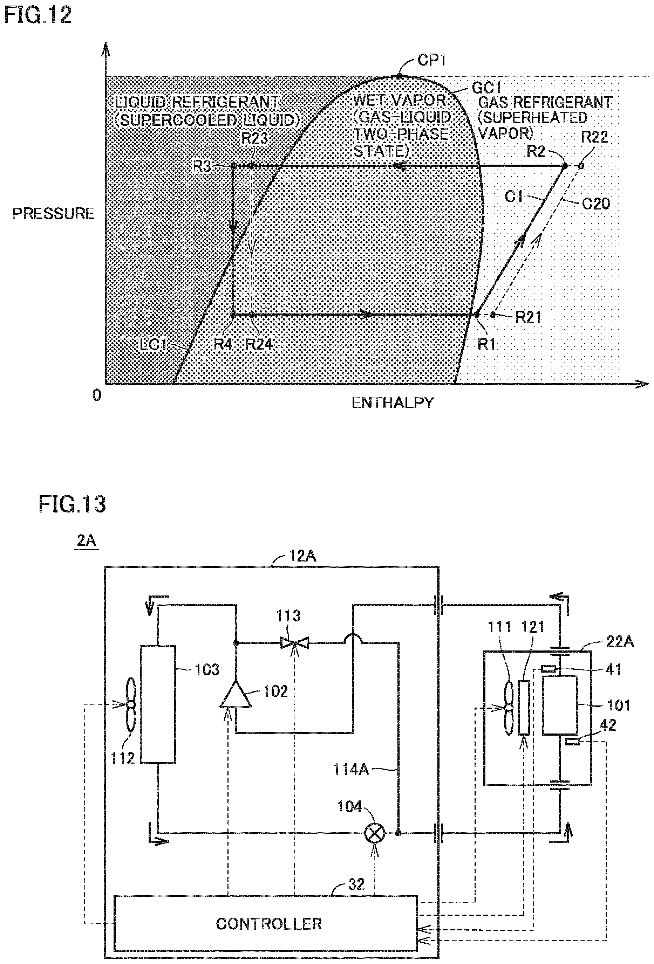

Fig. 12 is a P-h diagram showing the relation between the pressure and the enthalpy of the refrigerant in the second embodiment. In Fig. 12, a cycle C20 represents circulation of the refrigerant during the defrosting shortening operation. As shown in Fig. 12, similarly to the first embodiment, an arrival point R21 of the evaporation process by evaporator 101 is higher in enthalpy than arrival point R1 of the evaporation process in cycle C1 because the rotation speed of indoor fan 111 is increased. In the second embodiment, as the effect of allowing the hot gas to join the wet vapor flowing into evaporator 101, the enthalpy in an adiabatic expansion process expressed as a state change from a point R23 to a point R24 in cycle C12 is higher than that in cycle C1. The enthalpy of the wet vapor flowing into evaporator 101 increases, and thus, vaporization of the liquid refrigerant in evaporator 101 is promoted. As a result, the amount of the liquid refrigerant in evaporator 101 can be reduced.

As described above, according to the second embodiment, in addition to increasing the rotation speed of the indoor fan, the hot gas joins the wet vapor flowing into the evaporator during the defrosting shortening operation, and thus, the amount of the liquid refrigerant in the evaporator can be reduced as compared with the first embodiment. As a result, the length of time required for the defrosting operation can be shortened and the user's comfort can be further increased as compared with the first embodiment.

### Modification of Second Embodiment

The second embodiment has given a description of the case in which the bypass flow path is disposed so as to extend from the outdoor unit to the indoor unit. A modification of the second embodiment will give a description of the case in which the entire bypass flow path is arranged in the outdoor unit. By arranging the entire bypass flow path in the outdoor unit, a length of a pipe of the bypass flow path can be reduced. In addition, the work for disposing the pipe so as to extend from the outdoor unit to the indoor unit can be omitted. As a result, the cost required for disposing the bypass flow path can be reduced.

Fig. 13 is a functional block diagram showing a configuration of a refrigerator 2A which is one example of a refrigeration cycle apparatus according to the modification of the second embodiment. In refrigerator 2A shown in Fig. 13, expansion valve 104 is arranged in an outdoor unit 12A. A bypass flow path 114A joins a portion of a flow path between expansion valve 104 and evaporator 101 that is included in outdoor unit 12A. As a result, bypass flow path 114A as a whole is arranged in outdoor unit 12A.

As described above, according to the modification of the second embodiment, similarly to the second embodiment, the defrosting time can be shortened and the user's comfort can be further increased as compared with the first embodiment, and the cost required for disposing the bypass flow path can be reduced.

### Third Embodiment

The first embodiment has given a description of the case in which the process of heating the evaporator by the indoor heater is executed after the defrosting shortening operation. A third embodiment will give a description of the case of heating the condenser by an outdoor heater during the defrosting shortening operation. By heating the condenser during the defrosting shortening operation, the enthalpy of the liquid refrigerant output from the condenser increases, and thus, vaporization of the liquid refrigerant in the adiabatic expansion process by the expansion valve is promoted. As a result, the amount of the liquid refrigerant in the evaporator can be reduced.

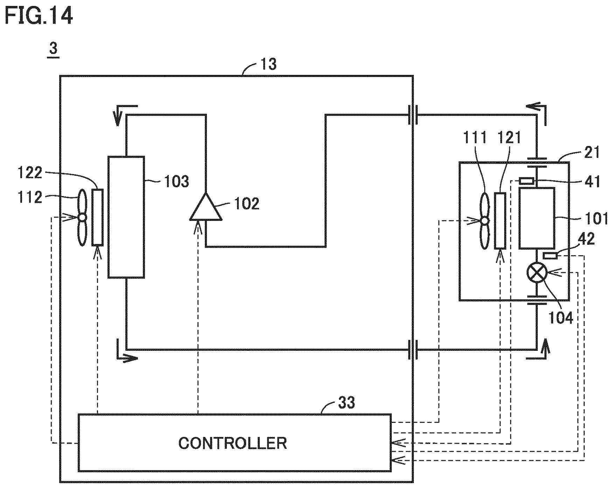

Fig. 14 is a functional block diagram showing a configuration of a refrigerator 3 which is one example of a refrigeration cycle apparatus according to the third embodiment. Refrigerator 3 shown in Fig. 14 is configured such that an outdoor heater 122 is added to the configuration of refrigerator 1 in Fig. 1 and controller 31 is replaced with a controller 33. Since the remaining configuration is similar, description thereof will not be repeated. Outdoor heater 122 is controlled by controller 33 to heat condenser 103.

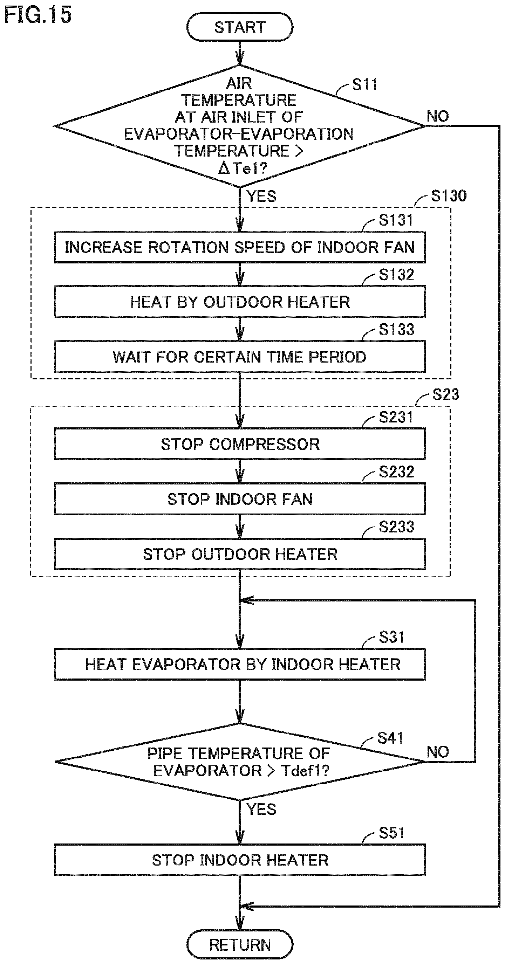

Fig. 15 is a flowchart for illustrating a process flow of defrosting operation performed in the third embodiment. In the flowchart shown in Fig. 15, S110 and S21 in Fig. 4 are replaced with S130 and S23, respectively. As shown in Fig. 15, when the defrosting start condition is satisfied in S11, controller 33 increases the rotation speed of indoor fan 111 in S131 similarly to the first embodiment, and operates outdoor heater 122 to start heating of condenser 103 in S132, and then, waits for a certain time period in S133 and moves the process to S23. In S23, controller 33 stops compressor 102 and indoor fan 111 (S231 and S232) and stops outdoor heater 122 (S233), and then, moves the process to S31. Controller 33 heats evaporator 101 by indoor heater 121 until the defrosting end condition is satisfied (YES in S41). Thereafter, in S51, controller 33 stops indoor heater 121, and returns the process to the main routine.

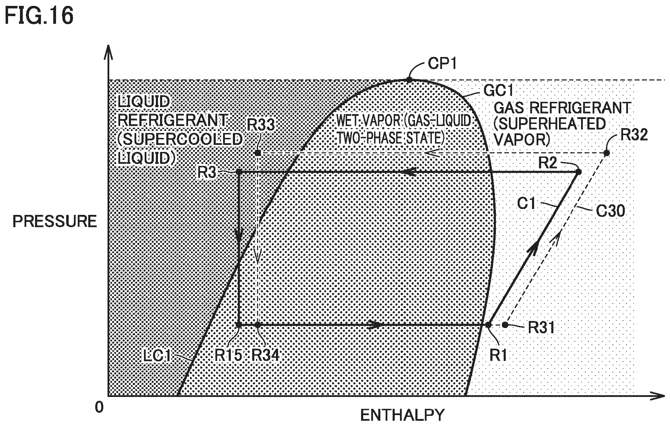

Fig. 16 is a P-h diagram showing the relation between the pressure and the enthalpy of the refrigerant in the third embodiment. In Fig. 16, a cycle C30 represents circulation of the refrigerant during the defrosting shortening operation. As shown in Fig. 16, similarly to the first embodiment, an arrival point R31 of the evaporation process by evaporator 101 is higher in enthalpy than arrival point R1 of the evaporation process in cycle C1 because the rotation speed of indoor fan 111 is increased. In the third embodiment, as the effect of heating condenser 103 by outdoor heater 122, firstly, the condensation pressure in the condensation process expressed as a state change from a point R32 to a point R33 in cycle C30 is higher than that in cycle C1 because the temperature of the refrigerant rises. In addition, the enthalpy in the adiabatic expansion process expressed as a state change from point R33 to a point R34 in cycle C30 is higher than that in cycle C1. Therefore, vaporization of the liquid refrigerant in the adiabatic expansion process by expansion valve 104 is promoted. As a result, the amount of the liquid refrigerant in evaporator 101 can be reduced.

As described above, according to the third embodiment, in addition to increasing the rotation speed of the indoor fan, the condenser is heated during the defrosting shortening operation, and thus, the amount of the liquid refrigerant in the evaporator can be reduced as compared with the first embodiment. As a result, the length of time required for the defrosting operation can be shortened and the user's comfort can be further increased as compared with the first embodiment.

### Fourth Embodiment

The first embodiment has given a description of the refrigeration cycle apparatus in which the circulation direction of the refrigerant does not change. A fourth embodiment will give a description of a refrigeration cycle apparatus in which the circulation direction of the refrigerant during the heating operation is opposite to the circulation direction of the refrigerant during the cooling operation.

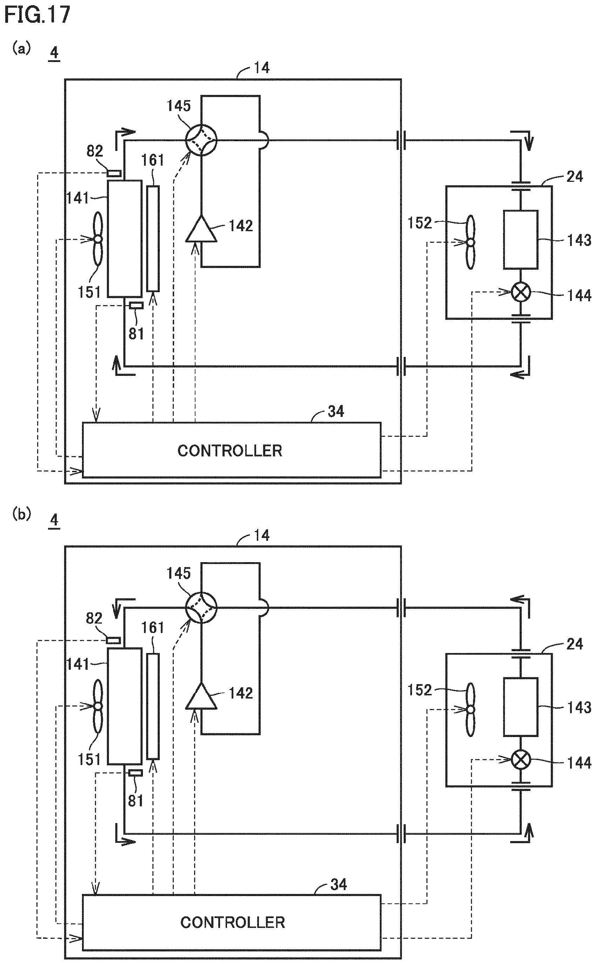

Fig. 17 is a functional block diagram showing a configuration of an air conditioning apparatus 4 which is one example of a refrigeration cycle apparatus according to the fourth embodiment. Fig. 17(a) shows a flow of the refrigerant during the heating operation. Fig. 17(b) shows a flow of the refrigerant during the cooling operation and the defrosting operation.

As shown in Fig. 17, air conditioning apparatus 4 includes an outdoor unit 14 and an indoor unit 24. Outdoor unit 14 includes a heat exchanger 141, a compressor 142, a four-way valve 145, an outdoor fan 151, an outdoor heater 161, a controller 34, and temperature sensors 81 and 82. Indoor unit 24 includes a heat exchanger 143, an expansion valve 144 and an indoor fan 152. Controller 34 may be included in indoor unit 24, or may be arranged outside outdoor unit 14 and indoor unit 24.

Four-way valve 145 is controlled by controller 34, and during the heating operation, four-way valve 145 forms a flow path such that the refrigerant circulates through heat exchanger 141, compressor 142, heat exchanger 143, and expansion valve 144 in this order as shown in Fig. 17(a). During the cooling operation and the defrosting operation, four-way valve 145 forms a flow path such that the refrigerant circulates through compressor 142, heat exchanger 141, expansion valve 144, and heat exchanger 143 in this order as shown in Fig. 17(b).

Compressor 142 compresses low-pressure gas refrigerant and outputs high-pressure gas refrigerant. Heat exchanger 141 functions as a condenser during the cooling operation and the defrosting operation, and functions as an evaporator during the heating operation. Outdoor fan 151 blows air into heat exchanger 141. Outdoor heater 161 operates during the defrosting operation to heat heat exchanger 141. Temperature sensor 81 is disposed in a pipe of heat exchanger 141 and outputs the detected pipe temperature to controller 34. Temperature sensor 82 is disposed near an air inlet of heat exchanger 141 and outputs the detected air temperature to controller 34.

Expansion valve 144 adiabatically expands and decompresses liquid refrigerant and discharges wet vapor. A linear expansion valve (LEV) can, for example, be used as expansion valve 144. Heat exchanger 143 functions as an evaporator during the cooling operation and the defrosting operation, and functions as a condenser during the heating operation. Indoor fan 152 blows air into heat exchanger 143.

Controller 34 controls a driving frequency of compressor 142 to thereby control an amount of the refrigerant discharged by compressor 142 per unit time. Controller 34 obtains the pipe temperature of heat exchanger 141 from temperature sensor 81. Controller 34 obtains the temperature of the air taken into heat exchanger 141 from temperature sensor 82. Controller 34 adjusts a rotation speed of each of outdoor fan 151 and indoor fan 152 to thereby control an amount of air blown by each of outdoor fan 151 and indoor fan 152 per unit time.

In the fourth embodiment, during the heating operation, frost may in some cases form on heat exchanger 141 arranged in outdoor unit 14 having a low outdoor air temperature and functioning as an evaporator that deprives the outdoor air of heat. In the fourth embodiment, the defrosting operation is performed, with the heating operation being interrupted. Defrosting in the fourth embodiment is performed by heating heat exchanger 141 by outdoor heater 161 and causing the refrigerant to flow reversely to the refrigerant flow during the heating operation, without stopping the compressor, and causing heat exchanger 141 to function as a condenser to thereby release heat.

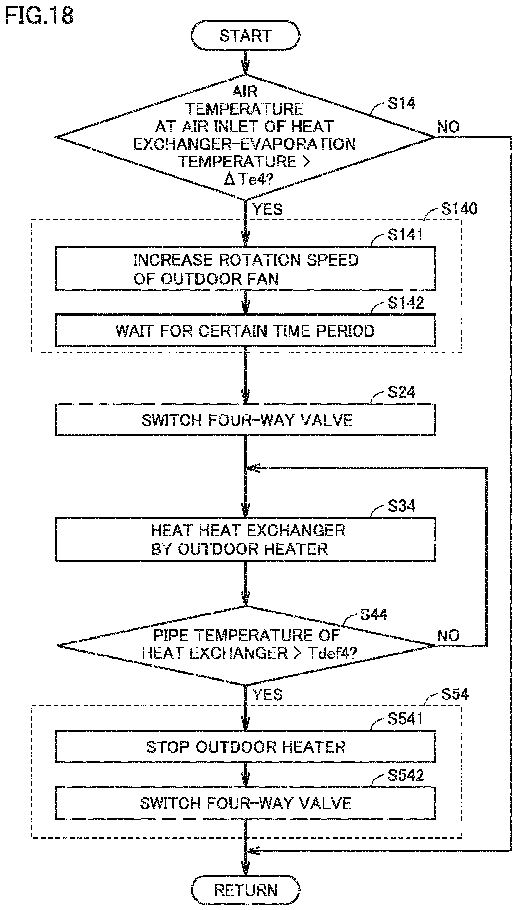

Fig. 18 is a flowchart for illustrating a process flow of defrosting operation performed in the fourth embodiment. As shown in Fig. 18, in S14, controller 34 determines as the defrosting start condition whether or not a difference between the air temperature at the air inlet of heat exchanger 141 and the evaporation temperature is greater than a reference value ΔTe4. When the difference between the air temperature at the air inlet of heat exchanger 141 and the evaporation temperature is equal to or smaller than reference value ΔTe4 (NO in S14), controller 34 returns the process to the main routine because the air temperature around heat exchanger 141 is sufficiently reduced by heat exchange between the air around heat exchanger 141 and the liquid refrigerant. When the difference between the air temperature at the air inlet of heat exchanger 141 and the evaporation temperature is greater than reference value ΔTe4 (YES in S14), controller 34 moves the process to S141 because the heat exchange efficiency of heat exchanger 141 decreases due to formation of frost and thus the air conditioning capacity of air conditioning apparatus 4 decreases and continuation of the heating operation becomes difficult.

In S141, controller 34 increases the rotation speed of outdoor fan 151, and moves the process to S142. In S142, controller 34 waits for a certain time period, and moves the process to S24. In S24, controller 34 controls four-way valve 145 to switch the circulation direction of the refrigerant from the circulation direction during the heating operation to the circulation direction during the defrosting operation, and moves the process to S34. In order to melt frost formed on heat exchanger 141, controller 34 operates outdoor heater 161 to heat heat exchanger 141 in S34, and moves the process to S44.

In S44, controller 34 determines as the defrosting end condition whether or not the pipe temperature of heat exchanger 141 is higher than a reference temperature Tdef4. When the pipe temperature of heat exchanger 141 is equal to or lower than reference temperature Tdef4 (NO in S44), controller 34 returns the process to S34 because heating of heat exchanger 141 is insufficient. When the pipe temperature of heat exchanger 141 is higher than reference temperature Tdef4 (YES in S44), controller 34 moves the process to S541 because heat exchanger 141 is sufficiently heated and defrosting is completed. Controller 34 stops outdoor heater 161 in S541, and then, controls the four-way valve to switch the circulation direction of the refrigerant from the circulation direction during the defrosting operation to the circulation direction during the heating operation in S542, and returns the process to the main routine.

As described above, according to the fourth embodiment, the rotation speed of the outdoor fan is increased during the defrosting shortening operation, and thus, the amount of the liquid refrigerant in the heat exchanger subjected to defrosting can be reduced, also in the refrigeration cycle apparatus in which the circulation direction of the refrigerant during the heating operation is opposite to the circulation direction of the refrigerant during the cooling operation. As a result, the length of time required for the defrosting operation can be shortened and the user's comfort can be increased.

### Fifth Embodiment

A fifth embodiment will give a description of a configuration in which the hot gas output from the compressor joins a flow path connecting the expansion valve and the heat exchanger functioning as an evaporator. Similarly to the second embodiment, by using the hot gas to increase the enthalpy of the wet vapor flowing into the heat exchanger functioning as an evaporator, vaporization of the liquid refrigerant in the heat exchanger is promoted. As a result, the amount of the liquid refrigerant in the heat exchanger functioning as an evaporator can be reduced.

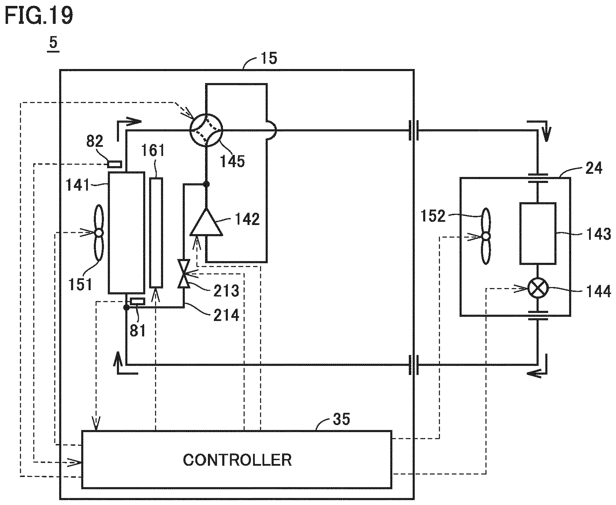

Fig. 19 is a functional block diagram showing a configuration of an air conditioning apparatus 5 which is one example of a refrigeration cycle apparatus according to the fifth embodiment. As shown in Fig. 19, air conditioning apparatus 5 is configured such that an on-off valve 213 and a bypass flow path 214 are added to the configuration of air conditioning apparatus 4 shown in Fig. 17(a) and controller 34 is replaced with a controller 35. Opening and closing of on-off valve 213 are controlled by controller 35. Bypass flow path 214 branches off from a flow path between compressor 142 and heat exchanger 143, passes through on-off valve 213, and joins a flow path between expansion valve 144 and heat exchanger 141. On-off valve 213 is desirably an electromagnetic valve that can be opened and closed instantaneously.

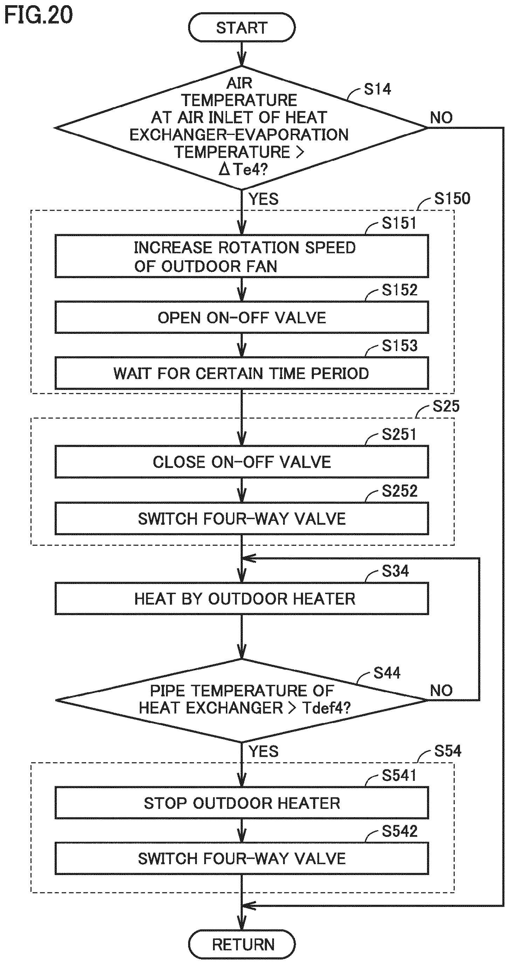

Fig. 20 is a flowchart for illustrating a process flow of defrosting operation performed in the fifth embodiment. In the flowchart shown in Fig. 20, S140 and S24 in Fig. 18 are replaced with S150 and S25, respectively. As shown in Fig. 20, when the defrosting start condition is satisfied in S14, controller 35 increases the rotation speed of outdoor fan 151 in S151 similarly to the fourth embodiment, and opens on-off valve 213 in S152, and then, waits for a certain time period in S153 and moves the process to S251. Controller 35 closes on-off valve 213 in S251, and then, controls four-way valve 145 to switch the circulation direction of the refrigerant in S252 and moves the process to S34. Controller 35 heats heat exchanger 141 by outdoor heater 161 until the defrosting end condition is satisfied (YES in S44). Thereafter, controller 35 stops outdoor heater 161 in S541, and then, controls four-way valve 145 to switch the circulation direction of the refrigerant in S542, and returns the process to the main routine.

As described above, according to the fifth embodiment, in addition to increasing the rotation speed of the outdoor fan, the hot gas joins the wet vapor flowing into the heat exchanger functioning as an evaporator during the defrosting shortening operation, and thus, the amount of the liquid refrigerant in the heat exchanger can be reduced as compared with the fourth embodiment. As a result, the length of time required for the defrosting operation can be shortened and the user's comfort can be further increased as compared with the fourth embodiment.

The fourth and fifth embodiments have given a description of the case in which the process of heating the heat exchanger functioning as an evaporator by the outdoor heater is executed during the defrosting shortening operation. In the fourth and fifth embodiments, the circulation direction of the refrigerant is reversed during the defrosting operation, and thus, the heat exchanger subjected to defrosting functions as a condenser to thereby release heat. Therefore, the consumed power is suppressed, and thus, heating by the outdoor heater is not necessarily required during the defrosting operation.

The first to fifth embodiments have given a description of the case in which the refrigeration cycle apparatus includes one outdoor unit and one indoor unit. The refrigeration cycle apparatus according to the present invention may include a plurality of outdoor units, or may include a plurality of indoor units.

The embodiments disclosed herein are also intended to be implemented in combination as appropriate to the extent that they are consistent. It should be understood that the embodiments disclosed herein are illustrative and non-restrictive in every respect. The scope of the present invention is defined by the terms of the claims, rather than the description above, and is intended to include any modifications within the scope of the claims.

### REFERENCE SIGNS LIST

1, 2, 2A, 3 refrigerator; 4, 5 air conditioning apparatus; 11, 12A, 14 outdoor unit; 21, 24 indoor unit; 31, 32, 33, 34, 35 controller; 41, 42, 81, 82 temperature sensor; 101 evaporator; 102, 142 compressor; 103 condenser; 104, 144 expansion valve; 111, 152 indoor fan; 112, 151 outdoor fan; 113, 213 on-off valve; 114, 114A, 214 bypass flow path; 121 indoor heater; 122, 161 outdoor heater; 141, 143 heat exchanger; 145 four-way valve.

## Claims

1. A refrigeration cycle apparatus (1) configured to circulate refrigerant in a first circulation direction in order of a first heat exchanger (101), a compressor (102), a second heat exchanger (103), and an expansion valve (104), and perform defrosting operation when a start condition for the defrosting operation is satisfied, the refrigeration cycle apparatus (1) comprising:
a first blower (111) configured to blow air into the first heat exchanger (101);
a controller (31) configured to control an amount of air blown by the first blower (111); and
a first heating device (121) configured to heat the first heat exchanger (101),
when the start condition is satisfied, the controller (31) being configured to increase the amount of air blown by the first blower (111) per unit time and decrease a degree of opening of the expansion valve (104),
when a certain time period elapses after the start condition is satisfied, the controller (31) being configured to stop the compressor (102) and the first blower (111) and then operate the first heating device (121).

2. The refrigeration cycle apparatus (1) according to claim 1, further comprising
a second blower (112) configured to blow air into the second heat exchanger (103), wherein
the controller (31) is configured to increase an amount of air blown by the second blower (112) per unit time, when the start condition is satisfied.

3. The refrigeration cycle apparatus (2) according to claim 1, further comprising:
a first on-off valve (113); and
a first bypass flow path (114) branching off from a first flow path between the compressor (102) and the second heat exchanger (103), passing through the first on-off valve (113), and joining a second flow path between the expansion valve (104) and the first heat exchanger (101), wherein
the controller (32) is configured to close the first on-off valve (113) when the start condition is not satisfied, and to open the first on-off valve (113) when the start condition is satisfied.

4. The refrigeration cycle apparatus (2A) according to claim 3, further comprising:
an outdoor unit (12A) configured to house the compressor (102), the second heat exchanger (103) and the expansion valve (104); and
an indoor unit (22A) configured to house the first heat exchanger (101), wherein
the first bypass flow path (114A) is housed in the outdoor unit (12A).

5. The refrigeration cycle apparatus (3) according to claim 1, further comprising
a second heating device (122) configured to heat the second heat exchanger (103), wherein
the controller (33) is configured to operate the second heating device (122) when the start condition is satisfied.

6. The refrigeration cycle apparatus (4) according to claim 1, further comprising
a flow path switching device (145) configured to switch a circulation direction of the refrigerant between the first circulation direction and a second circulation direction opposite to the first circulation direction, wherein
the controller (34) is configured to switch the circulation direction of the refrigerant from the first circulation direction to the second circulation direction when the start condition is satisfied.

7. The refrigeration cycle apparatus (5) according to claim 6, further comprising:
a second on-off valve (213); and
a second bypass flow path (214) branching off from a third flow path between the compressor (142) and the second heat exchanger (143), passing through the second on-off valve (213), and joining a fourth flow path between the expansion valve (144) and the first heat exchanger (141), wherein
the controller (35) is configured to close the second on-off valve (213) when the start condition is not satisfied, and to open the second on-off valve (213) when the start condition is satisfied.

8. The refrigeration cycle apparatus (1) according to claim 1, wherein
the start condition is a condition indicating that a heat exchange efficiency of the first heat exchanger (101) falls below a reference value.

## Patentansprüche

1. Kältekreislaufvorrichtung (1), die ausgelegt ist, um ein Kältemittel in einer ersten Zirkulationsrichtung in der Reihenfolge eines ersten Wärmetauschers (101), eines Kompressors (102), eines zweiten Wärmetauschers (103) und eines Expansionsventils (104) zu zirkulieren und einen Abtauvorgang durchzuführen, wenn eine Startbedingung für den Abtauvorgang erfüllt ist, wobei die Kältekreislaufvorrichtung (1) Folgendes umfasst:
ein erstes Gebläse (111), das ausgelegt ist, um Luft in den ersten Wärmetauscher (101) zu blasen; und
eine Steuervorrichtung (31), die ausgelegt ist, um eine von dem ersten Gebläse (111) geblasene Luftmenge zu steuern; und
eine erste Heizvorrichtung (121), die ausgelegt ist, um den ersten Wärmetauscher (101) zu erwärmen, wobei, wenn die Startbedingung erfüllt ist, die Steuervorrichtung (31) ausgelegt ist, um die durch das erste Gebläse (111) geblasene Luftmenge pro Zeiteinheit zu erhöhen und einen Öffnungsgrad des Expansionsventils (104) zu verringern,
und wenn eine bestimmte Zeitspanne nach Erfüllung der Startbedingung verstrichen ist, die Steuervorrichtung (31) ausgelegt ist, den Kompressor (102) und das erste Gebläse (111) zu stoppen und dann die erste Heizvorrichtung (121) zu betreiben.

2. Kältekreislaufvorrichtung (1) nach Anspruch 1, ferner umfassend ein zweites Gebläse (112), das ausgelegt ist, um Luft in den zweiten Wärmetauscher (103) zu blasen, wobei
die Steuervorrichtung (31) ausgelegt ist, um die durch das zweite Gebläse (112) geblasene Luftmenge pro Zeiteinheit zu erhöhen, wenn die Startbedingung erfüllt ist.

3. Kältekreislaufvorrichtung (2) nach Anspruch 1, ferner umfassend:
ein erstes Ein-Aus-Ventil (113); und
einen ersten Bypass-Strömungspfad (114), der von einem ersten Strömungspfad zwischen dem Kompressor (102) und dem zweiten Wärmetauscher (103) abzweigt, durch das erste Ein-Aus-Ventil (113) verläuft und in einen zweiten Strömungspfad zwischen dem Expansionsventil (104) und dem ersten Wärmetauscher (101) mündet, wobei
die Steuervorrichtung (32) ausgelegt ist, um das erste Ein-Aus-Ventil (113) zu schließen, wenn die Startbedingung nicht erfüllt ist, und das erste Ein-Aus-Ventil (113) zu öffnen, wenn die Startbedingung erfüllt ist.

4. Kältekreislaufvorrichtung (2A) nach Anspruch 3, ferner umfassend:
eine Außeneinheit (12A), die ausgelegt ist, um den Kompressor (102), den zweiten Wärmetauscher (103) und das Expansionsventil (104) unterzubringen; und
eine Inneneinheit (22A), die ausgelegt ist, um den ersten Wärmetauscher (101) unterzubringen, wobei der erste Bypass-Strömungspfad (114A) in der Außeneinheit (12A) untergebracht ist.

5. Kältekreislaufvorrichtung (3) nach Anspruch 1, ferner umfassend eine zweite Heizvorrichtung (122), die ausgelegt ist, um den zweiten Wärmetauscher (103) zu erwärmen, wobei
die Steuervorrichtung (33) ausgelegt ist, um die zweite Heizvorrichtung (122) zu betreiben, wenn die Startbedingung erfüllt ist.

6. Kältekreislaufvorrichtung (4) nach Anspruch 1, ferner umfassend:
eine Strömungspfad-Schaltvorrichtung (145), die ausgelegt ist, um eine Zirkulationsrichtung des Kältemittels zwischen der ersten Zirkulationsrichtung und einer der ersten Zirkulationsrichtung entgegengesetzten zweiten Zirkulationsrichtung umzuschalten, wobei
die Steuervorrichtung (34) ausgelegt ist, um die Zirkulationsrichtung des Kältemittels von der ersten Zirkulationsrichtung auf die zweite Zirkulationsrichtung umzuschalten, wenn die Startbedingung erfüllt ist.

7. Kältekreislaufvorrichtung (5) nach Anspruch 6, ferner umfassend:
ein zweites Ein-Aus-Ventil (213); und
einen zweiten Bypass-Strömungspfad (214), der von einem dritten Strömungspfad zwischen dem Kompressor (142) und dem zweiten Wärmetauscher (143) abzweigt, durch das zweite Ein-Aus-Ventil (213) verläuft und in einen vierten Strömungspfad zwischen dem Expansionsventil (144) und dem ersten Wärmetauscher (141) mündet, wobei
die Steuervorrichtung (35) ausgelegt ist, um das zweite Ein-Aus-Ventil (213) zu schließen, wenn die Startbedingung nicht erfüllt ist, und das zweite Ein-Aus-Ventil (213) zu öffnen, wenn die Startbedingung erfüllt ist.

8. Kältekreislaufvorrichtung (1) nach Anspruch 1, wobei
die Startbedingung eine Bedingung ist, die anzeigt, dass eine Wärmetauschwirksamkeit des ersten Wärmetauschers (101) unter einen Referenzwert fällt.

## Revendications

1. Appareil à cycles de réfrigération (1) configuré pour faire circuler du frigorigène dans une première direction de circulation dans l'ordre d'un premier échangeur de chaleur (101), d'un compresseur (102), d'un second échangeur de chaleur (103) et d'un détendeur (104), et effectuer une opération de dégivrage lorsqu'une condition de départ pour l'opération de dégivrage est satisfaite, l'appareil à cycles de réfrigération (1) comprenant :
une première soufflante (111) configurée pour souffler de l'air dans le premier échangeur de chaleur (101) ;
un dispositif de commande (31) configuré pour commander une quantité d'air soufflé par la première soufflante (111) ; et
un premier dispositif de chauffage (121) configuré pour chauffer le premier échangeur de chaleur (101),
lorsque la condition de départ est satisfaite, le dispositif de commande (31) étant configuré pour augmenter la quantité d'air soufflé par la première soufflante (111) par unité de temps et diminuer un degré d'ouverture du détendeur (104),
lorsqu'une certaine période de temps s'écoule après que la condition de départ soit satisfaite, le dispositif de commande (31) est configuré pour arrêter le compresseur (102) et la première soufflante (111) et ensuite faire fonctionner le premier dispositif de chauffage (121).

2. Appareil à cycles de réfrigération (1) selon la revendication 1, comprenant en outre
une seconde soufflante (112) configurée pour souffler de l'air dans le second échangeur de chaleur (103), dans lequel
le dispositif de commande (31) est configuré pour augmenter une quantité d'air soufflé par la seconde soufflante (112) par unité de temps, lorsque la condition de départ est satisfaite.

3. Appareil à cycles de réfrigération (2) selon la revendication 1, comprenant en outre :
une première vanne marche-arrêt (113) ; et
un premier trajet d'écoulement de dérivation (114) se ramifiant à partir d'un premier trajet d'écoulement entre le compresseur (102) et le second échangeur de chaleur (103), passant par la première vanne marche-arrêt (113), et joignant un second trajet d'écoulement entre le détendeur (104) et le premier échangeur de chaleur (101), dans lequel
le dispositif de commande (32) est configuré pour fermer la première vanne marche-arrêt (113) lorsque la condition de départ n'est pas satisfaite, et pour ouvrir la première vanne marche-arrêt (113) lorsque la condition de départ est satisfaite.

4. Appareil à cycles de réfrigération (2A) selon la revendication 3, comprenant en outre :
une unité extérieure (12A) configurée pour loger le compresseur (102), le second échangeur de chaleur (103) et le détendeur (104) ; et
une unité intérieure (22A) configurée pour loger le premier échangeur de chaleur (101), dans lequel
le premier trajet d'écoulement de dérivation (114A) est logé dans l'unité extérieure (12A).

5. Appareil à cycles de réfrigération (3) selon la revendication 1, comprenant en outre un second dispositif de chauffage (122) configuré pour chauffer le second échangeur de chaleur (103), dans lequel
le dispositif de commande (33) est configuré pour faire fonctionner le second dispositif de chauffage (122) lorsque la condition de départ est satisfaite.

6. Appareil à cycles de réfrigération (4) selon la revendication 1, comprenant en outre
un dispositif de commutation de trajet d'écoulement (145) configuré pour commuter une direction de circulation du frigorigène entre la première direction de circulation et une seconde direction de circulation opposée à la première direction de circulation, dans lequel
le dispositif de commande (34) est configuré pour commuter la direction de circulation du frigorigène de la première direction de circulation à la seconde direction de circulation lorsque la condition de départ est satisfaite.

7. Appareil à cycles de réfrigération (5) selon la revendication 6, comprenant en outre :
une seconde vanne marche-arrêt (213) ; et
un deuxième trajet d'écoulement de dérivation (214) se ramifiant à partir d'un troisième trajet d'écoulement entre le compresseur (142) et le second échangeur de chaleur (143), passant par la seconde vanne marche-arrêt (213), et joignant un quatrième trajet d'écoulement entre le détendeur (144) et le premier échangeur de chaleur (141), dans lequel
le dispositif de commande (35) est configuré pour fermer la seconde vanne marche-arrêt (213) lorsque la condition de départ n'est pas établie, et pour ouvrir la seconde vanne marche-arrêt (213) lorsque la condition de départ est satisfaite.

8. Appareil à cycles de réfrigération (1) selon la revendication 1, dans lequel
la condition de départ est une condition indiquant qu'une efficacité d'échange de chaleur du premier échangeur de chaleur (101) tombe en dessous d'une valeur de référence.
